# FASCICULE DE BREVET EUROPEEN

(11) **EP 2 491 232 B1**
(45) Date de publication et mention de la délivrance du brevet: **25.12.2013**
(21) Numéro de dépôt: 10770594.9
(22) Date de dépôt: 20.09.2010
(51) Int. Cl.: F01N 11/00

(54) **PROCEDE DE DETECTION DE DEFAILLANCE D'UN SYSTEME DE TRAITEMENT D'OXYDES D'AZOTE**
VERFAHREN ZUR DETEKTION EINER MECHANISCHEN STÖRUNG IN EINEM STICKOXIDBEHANDLUNGSSYSTEM
METHOD FOR DETECTING MECHANICAL FAILURE IN A NITROGEN OXIDE TREATMENT SYSTEM

(30) Priorité: 19.10.2009 FR 0957309
(43) Date de publication de la demande: 29.08.2012
(73) Titulaire: PEUGEOT CITROËN AUTOMOBILES SA, 78140 Velizy-Villacoublay (FR)
(72) Inventeur: GRISE, Clément, 92270 Bois Colombes (FR)
(74) Mandataire: Renous Chan, Véronique
(86) Numéro de dépôt international: PCT/FR2010/051954
(87) Numéro de publication internationale: WO 2011/048293

(56) Documents cités:
- EP-A1- 2 071 145
- JP-A- 7 180 535

## Description

La présente invention revendique la priorité de la demande française 0957309 déposée le 19 octobre 2009 dont le contenu (texte, dessins et revendications) est ici incorporé par référence.

La présente invention concerne un procédé de détection de défaillance d'un système de traitement d'oxydes d'azote produits par un moteur thermique d'un véhicule automobile.

L'invention trouve une application particulièrement avantageuse dans le domaine de la réduction de l'émission de gaz polluants par les véhicules automobiles à moteur thermique.

Depuis de nombreuses années, les constructeurs de véhicules automobiles à moteur thermique font beaucoup d'efforts pour réduire l'émission dans l'atmosphère de composés chimiques nuisibles à l'environnement produits par les moteurs thermiques lors de la combustion du carburant.

Parmi ces composés, on trouve notamment le dioxyde de carbone CO₂ ainsi que les oxydes d'azote, principalement le monoxyde NO et le dioxyde NO₂ d'azote, désignés ensemble sous l'abréviation NOₓ. Notons que la production d'oxydes d'azote est plus importante pour les moteurs Diesel que pour les moteurs à essence du fait de leur température de combustion plus élevée.

Pour limiter l'émission des oxydes d'azote dans l'atmosphère, une solution actuellement utilisée consiste à placer sur la ligne d'échappement du véhicule un système de traitement des NOₓ, appelé système SCR (« Selective Catalytic Reduction »), ayant pour fonction de réduire chimiquement les oxydes en azote moléculaire et en vapeur d'eau au moyen d'un agent réducteur comme l'ammoniac NH₃. En pratique, l'ammoniac est injecté dans la ligne d'échappement en amont d'un catalyseur spécifique SCR dans lequel se produit la réaction de réduction.

La réduction des oxydes d'azote par l'ammoniac selon les réactions SCR est un procédé bien connu et largement utilisé dans l'industrie, notamment dans des unités fixes. Appliqué à l'automobile, la difficulté du système de traitement SCR est d'apporter à l'échappement l'ammoniac nécessaire à la réduction des NOₓ et donc de pouvoir le stocker à bord du véhicule sous une forme quelconque. Pour cela, plusieurs concepts ont été développés pour embarquer l'ammoniac dans les véhicules : sous forme d'urée solide, sous forme d'urée liquide en solution aqueuse, sous forme de carbamate (ou urate) d'ammonium,... Dans tous les cas, l'ammoniac est obtenu par décomposition de l'urée ou de l'ion carbamate.

Un système de traitement SCR comporte donc un catalyseur spécifique placé sur la ligne d'échappement, un réservoir contenant de l'urée ou du carbamate d'ammonium et un dispositif d'injection de l'urée ou du carbamate d'ammonium en amont du catalyseur SCR.

Bien entendu, comme d'autres agents polluants, l'émission des oxydes d'azote est soumise à réglementation.

La réglementation en vigueur en Europe fixe à 0,08g/km le seuil d'émission des NOₓ lors d'un cycle de conduite normalisé, désigné par l'acronyme NEDC (« New European Driving Cycle »). Le cycle NEDC, d'une durée de 20mn, comprend une première phase de conduite de type « ville » suivie d'une seconde phase de conduite plus rapide de type « route ». La vitesse moyenne au cours de ce cycle est de 33 km/h.

Selon un autre aspect de la réglementation concernant le diagnostic d'une défaillance du système de traitement SCR, dite réglementation OBD (« On Board Diagnostics »), un dépassement du seuil, noté S_{OBD}, de 0,16g/km d'oxydes d'azote émis en aval du système de traitement SCR lors d'un cycle NEDC doit être signalé au conducteur par un témoin lumineux et enregistré dans la mémoire des défauts, car au-delà de ce seuil le système SCR est considéré comme défaillant.

Cependant, on comprend que, si le dépassement du seuil S_{OBD} lors d'un roulage du véhicule conforme au cycle NEDC est bien révélateur d'une défaillance du système de traitement SCR, un tel dépassement hors cycle NEDC n'est pas nécessairement dû à une défaillance du système SCR mais peut simplement résulter d'une utilisation du véhicule non prévue par la norme NEDC, par exemple dans le cas d'une forte accélération.

Aussi, un but de l'invention est de proposer un procédé de détection de défaillance d'un système de traitement d'oxydes d'azote produits par un moteur thermique d'un véhicule automobile, qui permettrait d'établir un diagnostic de défaillance pertinent du système de traitement prenant en compte, à la fois, les contraintes normatives imposées lors de roulages conformes à un cycle de conduite de référence, tel que le cycle normalisé NEDC, et les conditions particulières des roulages non conformes au cycle de conduite de référence.

Ce but est atteint, conformément à l'invention, du fait que ledit procédé comprend des étapes consistant :
* pour un cycle de conduite de référence, définir une différence de référence entre d'une part, une valeur maximale pour la quantité d'oxydes d'azote produits en amont du système et, d'autre part, un seuil pour la quantité d'oxydes d'azote émis en aval du système, et
* dans une phase de fonctionnement, calculer une quantité d'oxydes d'azote traités comme la différence entre la quantité d'oxydes d'azote en amont et la quantité d'oxydes d'azote émis en aval du système,
   - comparer ladite quantité d'oxydes d'azote émis en aval audit seuil (S_{OBD}), et la différence de référence à la quantité d'oxydes d'azote traités,
   - conclure à une défaillance du système de traitement si les deux comparaisons sont simultanément positives.

Dans un mode de réalisation particulier de l'invention, ledit cycle de conduite de référence est le cycle normalisé de conduite NEDC.

De même, l'invention prévoit notamment que ledit seuil pour la quantité d'oxydes d'azote émis en aval du système de traitement est conforme à la réglementation de diagnostic embarqué OBD.

Ainsi, le procédé selon l'invention propose une méthode de diagnostic de défaillance du système de traitement des NOₓ reposant sur une double comparaison.

La première comparaison concerne le seuil, noté S_{OBD} dans le cadre de la réglementation OBD, pour la quantité d'oxydes d'azote émis en aval du système de traitement et la quantité Qₐᵥₐₗ des oxydes effectivement émis.

La seconde comparaison concerne le seuil, noté Δ_{OBD}, pour la quantité d'oxydes d'azote traités par le système de traitement et la quantité Q_{SCR} d'oxydes d'azote effectivement traités. Si on note Q⁰ₐₘₒₙₜ la valeur maximale pour la quantité d'oxydes d'azote produits par le moteur thermique en amont du système de traitement lors du cycle de référence, alors Δ_{OBD} = Q⁰_{amont -} S_{OBD}.

Dans le cas d'un roulage conforme au cycle de conduite de référence, si la quantité Qₐᵥₐₗ de NOₓ émis est supérieure au seuil correspondant S_{OBD}, une défaillance du système SCR doit être diagnostiquée. Elle le sera de fait puisque, dans ces conditions, la quantité Q_{SCR} d'oxydes d'azote traités sera nécessairement inférieure au seuil Δ_{OBD}. La double comparaison est donc bien vérifiée.

Dans le cas d'un roulage hors cycle de conduite de référence, si la quantité Qₐᵥₐₗ de NOₓ émis est supérieure au seuil correspondant S_{OBD}, un diagnostic de défaillance ne sera pas nécessairement émis. Il ne le sera que si, dans le même temps, la quantité Q_{SCR} = Qₐₘₒₙt - Qₐᵥₐₗ d'oxydes d'azote traités est inférieure au seuil Δ_{OBD}. On impose de cette manière le déclenchement d'une alerte dès lors que la quantité d'oxydes d'azote traités est inférieure à ce qu'elle serait dans le cas du cycle de conduite de référence. En d'autres termes, le système de traitement sera considéré comme fonctionnel si la quantité Q_{SCR} de NOₓ traités est au moins égale à la quantité d'oxydes traités lors d'un cycle de référence, même si la quantité Qₐᵥₐₗ d'oxydes émis est supérieure au seuil S_{OBD}.

La description qui va suivre en regard des dessins annexés, donnés à titre d'exemples non limitatifs, fera bien comprendre en quoi consiste l'invention et comment elle peut être réalisée.
- La figure 1 est un schéma d'un système de traitement SCR d'oxydes d'azote dans un véhicule automobile à moteur thermique.
- La figure 2 est un bloc-diagramme d'une unité de pilotage du système de traitement SCR de la figure 1.
- La figure 3a est un diagramme d'un système de traitement diagnostiqué fonctionnel lors d'un cycle de conduite conforme au cycle NEDC.
- La figure 3b est un diagramme d'un système de traitement diagnostiqué défaillant lors d'un cycle de conduite conforme au cycle NEDC.
- La figure 4a est un diagramme d'un système de traitement diagnostiqué fonctionnel lors d'un cycle de conduite hors cycle NEDC.
- La figure 4b est un diagramme d'un système de traitement diagnostiqué défaillant lors d'un cycle de conduite hors au cycle NEDC.
- La figure 5 est un organigramme du procédé de diagnostic conforme à l'invention.
- La figure 6 est un diagramme donnant la quantité Q_{SCR} d'oxydes d'azote traités et la quantité Qₐᵥₐₗ d'oxydes d'azote émis lors du roulage d'un véhicule automobile.

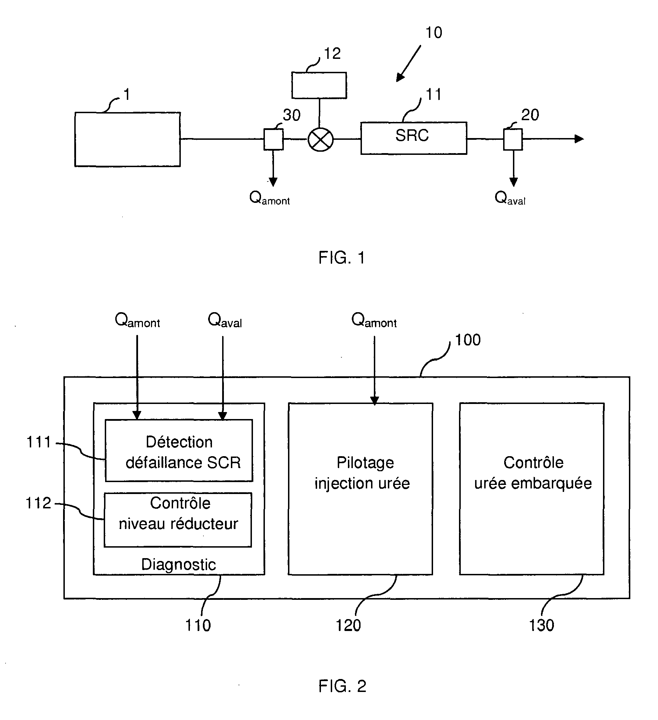

La figure 1 représente de façon schématique la ligne d'échappement d'un moteur 1 de véhicule automobile. Sur cette ligne d'échappement, est installé un système 10 de traitement SCR des oxydes d'azote NOₓ produits en sortie du moteur thermique 1, par réduction chimique au moyen d'un agent réducteur, par exemple de l'ammoniac NH₃.

Comme le montre la figure 1, le système 10 de traitement SCR comprend un catalyseur spécifique 11 dans lequel se produit la réaction de réduction des NOₓ. De l'urée, contenue par exemple dans un réservoir 12 sous forme liquide, est introduite dans la ligne d'échappement en amont du catalyseur 11. Sous l'action des hautes températures régnant dans la zone du point d'injection, l'urée se décompose pour donner l'ammoniac nécessaire à la réaction de réduction des oxydes d'azote.

Un premier capteur 20 de NOₓ est placé à la suite du catalyseur SCR 11 afin de mesurer la quantité Qₐᵥₐₗ d'oxydes d'azote émis en aval du système 10 de traitement SCR. Dans le cadre de la réglementation OBD relative au diagnostic de défaillance des systèmes SCR, ce premier capteur 20 permet de vérifier que la quantité Qₐᵥₐₗ d'oxydes d'azote émis est inférieure au seuil S_{OBD} fixé à 0,16g/km pour un roulage conforme au cycle normalisé de conduite NEDC.

Pour les besoins de l'invention, un deuxième capteur 30 de NOₓ est placé en amont du système 10 de traitement SCR dans le but de mesurer la quantité Qₐₘₒₙₜ d'oxydes d'azote produits en sortie du moteur thermique 1. Il faut noter cependant que cette quantité Qₐₘₒₙₜ d'oxydes d'azote peut être également déterminée par estimation au moyen d'un modèle d'émission de NOₓ par le moteur 1.

Le système 10 de traitement SCR est contrôlé par une unité 100 de pilotage représentée sur la figure 2 sous la forme de bloc-diagramme. Cette unité 100 de pilotage peut être embarquée à bord du véhicule dans un calculateur spécifique SCR ou intégrée dans le calculateur moteur existant.

Dans le module 120 de pilotage d'injection d'urée est déterminée à chaque instant la quantité d'ammoniac, et donc d'urée, à injecter dans la ligne d'échappement. Pour cela, le module 120 tient compte de la quantité Qₐₘₒₙₜ des oxydes d'azote à traiter, mesurée par le capteur 12 ou estimée par le modèle d'émission des NOₓ.

Le module 130 de contrôle de l'urée embarquée est chargé d'assurer l'injection de la quantité d'urée déterminée par le module 120 en réglant l'ouverture de l'injecteur de manière appropriée. Il doit également gérer le réservoir 12, par exemple en réchauffant l'urée en cas de gel.

Le module 110 est le module de diagnostic destiné à identifier les défauts de fonctionnement du système 10 de traitement SCR relativement à la réglementation OBD.

Comme le montre la figure 2, le module 110 de diagnostic comprend deux sous-modules référencés 111 et 112.

Le sous-module 112 de contrôle de niveau de réducteur est chargé de s'assurer que le niveau d'urée, par exemple, est suffisant pour que le véhicule puisse dépolluer les gaz d'échappement en oxydes d'azote. Dans la négative, une alerte est émise vers le conducteur afin qu'il recharge le réservoir 12 en urée. Ce contrôle de niveau est nécessaire pour respecter la réglementation OBD.

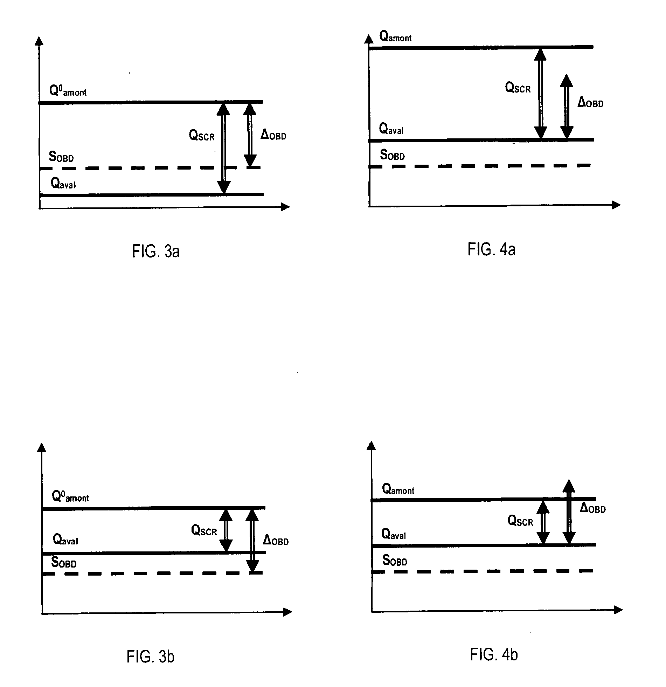

Le sous-module 111 a pour fonction de détecter une défaillance du système 10 de traitement SCR en regard de la réglementation OBD. A cet effet, il reçoit les informations Qₐₘₒₙₜ et Qₐᵥₐₗ. C'est dans ce sous-module 111 qu'est implanté le procédé de détection conforme à l'invention qui va maintenant être décrit en détail en référence aux figures 3a à 5.

Dans une phase préliminaire du procédé, on enregistre dans le sous-module 111 le seuil S_{OBD} à ne pas dépasser de quantité d'oxydes d'azote émis en aval du système 10 de traitement SCR. Rappelons que ce seuil est fixé à 0,16g/km de NOₓ par la réglementation OBD pour le cycle normalisé de conduite NEDC.

De même, on définit et on enregistre dans le sous-module 111 un seuil Δ_{OBD} pour la quantité minimale d'oxydes d'azote à traiter par le système 10 de traitement SRC. Comme le montre la figure 3a, le seuil Δ_{OBD} est déterminé par la différence entre, d'une part, la valeur maximale Q⁰ₐₘₒₙₜ de la quantité d'oxydes d'azote produits par le moteur thermique 1 en amont du système SRC 10 lors d'un cycle NEDC et, d'autre part, le seuil S_{OBD} : Δ_{OBD} = Q⁰ₐₘₒₙₜ - S_{OBD}. En fait, on observe que la quantité Q⁰ₐₘₒₙₜ est sensiblement constante sur tout le cycle NEDC.

Lors du fonctionnement du véhicule, les quantités Qₐₘₒₙₜ et Qₐᵥₐₗ d'oxydes d'azote sont régulièrement déterminées de la manière expliquée plus haut et transmises au sous-module 111 afin qu'il puisse établir un diagnostic concernant l'efficacité du système 10 de traitement SCR, et, en particulier, détecter une situation de défaillance, laquelle sera assortie d'une alerte vers le conducteur du véhicule. Dans ce but, le sous-module 111 calcule la quantité Q_{SCR} d'oxydes d'azote effectivement traités par le système 10 de traitement comme la différence entre les quantités Qₐₘₒₙₜ et Qₐᵥₐₗ : Q_{SCR} = Qₐₘₒₙₜ - Qₐᵥₐₗ.

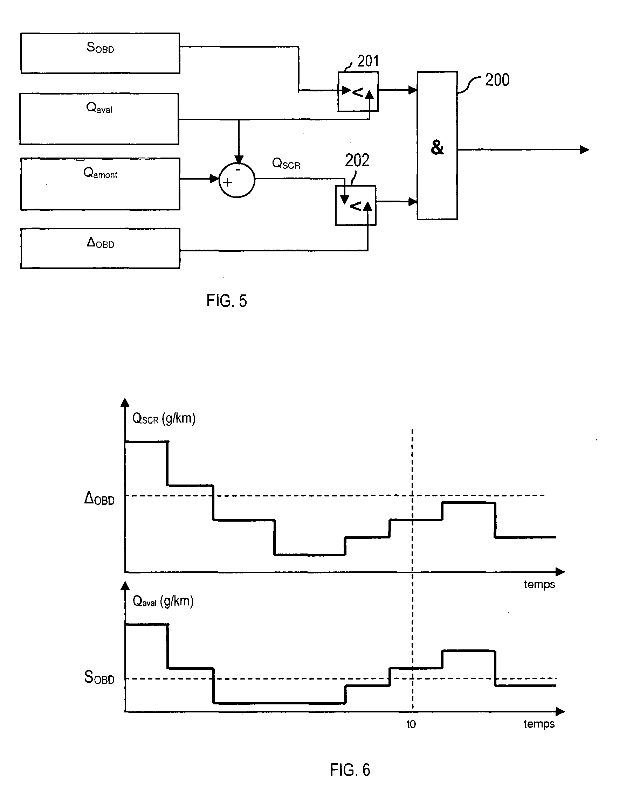

Le procédé de détection de défaillance conforme à l'invention est résumé sur l'organigramme de la figure 5. Comme on peut le voir sur cette figure, il comporte deux comparaisons.

Une première comparaison entre la quantité Qₐᵥₐₗ d'oxydes d'azote émis en aval du système 10 de traitement et le seuil S_{OBD} est effectuée par un premier comparateur 201 dont la sortie logique est appliquée à une première entrée d'une porte ET 200.

Une deuxième comparaison entre le seuil Δ_{OBD} et la quantité Q_{SCR} de NOₓ traités est effectuée par un deuxième comparateur 202 dont la sortie logique est appliquée à une deuxième entrée de la porte ET 200.

Les comparateurs 201, 202 sont configurés de manière à délivrer un même signal logique 1 si Qₐᵥₐₗ>S_{OBD} pour le premier comparateur 201 et si Δ_{OBD}>Q_{SCR} pour le deuxième comparateur 202. Si ces deux comparaisons sont vérifiées, la sortie logique de la porte ET 200 vaut 1 et un signal de défaillance du système SCR est émis.

On va maintenant expliquer sur différentes situations de fonctionnement du véhicule comment s'applique le procédé illustré sur la figure 5.

La figure 3a correspond à un véhicule effectuant un roulage conforme au cycle normalisé NEDC et pour lequel le système de traitement sera considéré comme fonctionnel. Dans ce cas, en effet, la quantité Qₐᵥₐₗ d'oxydes d'azote émis est inférieure au seuil S_{OBD} et la sortie logique du premier comparateur 201 vaut 0, ce qui est suffisant pour décider que le système SCR est fonctionnel puisque conforme à la réglementation OBD. On observera, de façon surabondante, que la quantité Q_{SCR} de NOₓ traités est supérieure au seuil Δ_{OBD}, ce qui place la sortie du deuxième comparateur 202 également au niveau logique 0.

La figure 3b correspond à un véhicule effectuant un roulage conforme au cycle normalisé NEDC mais pour lequel le système de traitement SCR sera considéré comme défaillant du fait que la quantité Qₐᵥₐₗ d'oxydes d'azote émis est supérieure au seuil S_{OBD}, la sortie logique du premier comparateur 201 étant alors à 1, et que la quantité Q_{SCR} de NOₓ traités est inférieure au seuil Δ_{OBD}, la sortie logique du deuxième comparateur 202 étant également à 1. La sortie logique de la porte ET valant 1, un signal de défaillance est émis.

La figure 4a correspond à un véhicule effectuant un roulage hors cycle normalisé NEDC et pour lequel le système de traitement sera considéré comme fonctionnel, bien que n'étant pas conforme à la réglementation OBD. Comme Qₐᵥₐₗ>S_{OBD}, la sortie du premier comparateur 201 vaut 1. Par contre, la sortie du deuxième comparateur 202 est à 0 puisque Δ_{OBD}<Q_{SCR}. La sortie logique de la porte ET 200 étant à 0, aucun signal de défaillance ne sera émis.

Enfin, la figure 4b correspond à un véhicule effectuant un roulage hors cycle normalisé NEDC et pour lequel le système de traitement sera considéré comme défaillant. A la différence du cas précédent, on a cette fois Δ_{OBD}>Q_{SCR} ce qui met à 1 la sortie du deuxième comparateur 202 et à 1 également la sortie du deuxième comparateur 202. Un signal de défaillance est alors émis.

La figure 6 montre un exemple de roulage d'un véhicule pour lequel une défaillance du système SCR sera détectée au moment t₀ où une demande de diagnostic sera faite, conformément à la situation illustrée sur la figure 4b.

## Revendications

1. Procédé de détection de défaillance d'un système (10) de traitement d'oxydes d'azote (NOₓ) produits par un moteur thermique, consistant à :
* pour un cycle de conduite de référence, définir une différence de référence (Δ_{OBD}) entre d'une part, une valeur maximale (Q⁰ₐₘₒₙₜ) pour la quantité d'oxydes d'azote produits en amont du système (10) et, d'autre part, un seuil (S_{OBD}) pour la quantité d'oxydes d'azote émis en aval du système (10), et
* dans une phase de fonctionnement, calculer une quantité (Q_{SCR}) d'oxydes d'azote traités comme la différence entre la quantité (Qₐₘₒₙₜ) d'oxydes d'azote produits et la quantité (Qₐᵥₐₗ) d'oxydes d'azote émis en aval du système,
- comparer ladite quantité (Qₐᵥₐₗ) d'oxydes d'azote émis en aval audit seuil (S_{OBD}), et la différence de référence (Δ_{OBD}) à la quantité (Q_{SCR}) d'oxydes d'azote traités,
- conclure à une défaillance du système de traitement si les deux comparaisons sont simultanément positives.

2. Procédé selon la revendication 1, dans lequel ledit cycle de conduite de référence est le cycle normalisé de conduite NEDC.

3. Procédé selon l'une des revendications 1 ou 2, dans lequel ledit seuil (S_{OBD}) pour la quantité d'oxydes d'azote émis en aval du système de traitement est conforme à la réglementation de diagnostic embarqué OBD.

4. Procédé selon l'une quelconque des revendications 1 à 3, dans lequel ladite (Qₐᵥₐₗ) d'oxydes d'azote émis en aval du système de traitement est déterminée par un premier capteur (20) d'oxydes d'azote.

5. Procédé selon l'une quelconque des revendications 1 à 4, dans lequel ladite quantité (Qₐₘₒₙₜ) d'oxydes d'azote produits par le moteur thermique en amont du système de traitement est déterminée par un deuxième capteur (30) d'oxydes d'azote.

6. Procédé selon l'une quelconque des revendications 1 à 4, dans lequel ladite quantité (Qₐₘₒₙₜ) d'oxydes d'azote produits par le moteur thermique en amont du système de traitement est déterminée au moyen d'un modèle d'émission d'oxydes d'azote par le moteur thermique.

## Patentansprüche

1. Verfahren zur Erkennung der Fehlleistung eines Systems (10) zur Aufbereitung von Stickstoffoxyden (NOₓ), die von einem Verbrennungsmotor erzeugt werden, das darin besteht:
* für einen Referenz-Fahrzyklus einen Referenzunterschied (Δ_{OBD}) zwischen einerseits einem maximalen Wert (Q⁰ₐₘₒₙₜ) für die Menge an Stickstoffoxyden, die vor dem System (10) erzeugt werden, und andererseits einem Grenzwert (S_{OBD}) für die Menge an Stickstoffoxyden zu definieren, die nach dem System (10) ausgestoßen wird, und
* in einer Betriebsphase eine Menge an aufbereiteten Stickstoffoxyden (Q_{SCR}) zu berechnen, als Differenz zwischen der Menge (Qₐₘₒₙₜ) an erzeugten Stickstoffoxyden und der Menge (Qₐᵥₐₗ) an Stickstoffoxyden, die nach dem System ausgestoßen wird,
- die besagte Menge (Qₐᵥₐₗ) an Stickstoffoxyden, die nachfolgend ausgestoßen wird, mit dem besagten Grenzwert (S_{OBD}), und den Referenzunterschied (Δ_{OBD}) mit der Menge an aufbereiteten Stickstoffoxyden (Q_{SCR}) zu vergleichen,
- auf eine Fehlleistung des Aufbereitungssystems zu schließen, wenn die beiden Vergleiche zugleich positiv sind.

2. Verfahren nach Anspruch 1, bei dem der besagte Referenz-Fahrzyklus der normierte NEDC-Fahrzyklus ist.

3. Verfahren nach einem der Ansprüche 1 oder 2, bei dem der besagte Grenzwert (S_{OBD}) für die Menge an Stickstoffoxyden, die nach dem Aufbereitungssystem ausgestoßen wird, den Vorschriften für die On-Board-Diagnose OBD entspricht.

4. Verfahren nach irgendeinem der Ansprüche 1 bis 3, bei dem die besagte Menge (Qₐᵥₐₗ) an Stickstoffoxyden, die nach dem Aufbereitungssystem ausgestoßen wird, durch einen ersten Stickstoffoxyd-Sensor (20) bestimmt wird.

5. Verfahren nach irgendeinem der Ansprüche 1 bis 4, bei dem die besagte Menge (Qₐₘₒₙₜ) an Stickstoffoxyden, die vom Verbrennungsmotor vor dem Aufbereitungssystem erzeugt wird, durch einen zweiten Stickstoffoxyd-Sensor (30) bestimmt wird.

6. Verfahren nach irgendeinem der Ansprüche 1 bis 4, bei dem die besagte Menge (Qₐₘₒₙₜ) an Stickstoffoxyden, die vom Verbrennungsmotor vor dem Aufbereitungssystem erzeugt wird, durch ein Stickstoffoxyd-Emissionsmodell durch den Verbrennungsmotor bestimmt wird.

## Claims

1. Method for detecting mechanical failure in a system (10) for treating nitrogen oxides (NOₓ) produced by a heat engine, consisting in:
* for a reference operating cycle, defining a reference difference (Δ_{OBD}) between on the one hand, a maximum value (Q⁰ₐₘₒₙₜ) for the quantity of nitrogen oxides produced upstream of the system (10) and, on the other hand, a threshold (S_{OBD}) for the quantity of nitrogen oxides emitted downstream of the system (10), and
* in an operation phase, calculating a quantity (Q_{SCR}) of treated nitrogen oxides as the difference between the quantity (Qₐₘₒₙₜ) of nitrogen oxides produced and the quantity (Qₐᵥₐₗ) of nitrogen oxides emitted downstream of the system,
- comparing said quantity (Qₐᵥₐₗ) of nitrogen oxides emitted downstream of said threshold (S_{OBD}), and the reference difference (Δ_{OBD}) with the quantity (Q_{SCR}) of treated nitrogen oxides,
- concluding a mechanical failure of the treatment system if both comparisons are simultaneously positive.

2. Method according to claim 1, wherein said reference driving cycle is the standardised driving cycle NEDC.

3. Method according to one of claims 1 or 2, wherein said threshold (S_{OBD}) for the quantity of nitrogen oxides emitted downstream of the treatment system is compliant with the on-board diagnostic OBD regulations.

4. Method according to any of claims 1 to 3, wherein said quantity (Qₐᵥₐₗ) of nitrogen oxides emitted downstream of the treatment system is determined by a first sensor (20) of nitrogen oxides.

5. Method according to any of claims 1 to 4, wherein said quantity (Qₐₘₒₙₜ) of nitrogen oxides produced by the heat engine upstream of the treatment system is determined by a second sensor (30) of nitrogen oxides.

6. Method according to any of claims 1 to 4, wherein said quantity (Qₐₘₒₙₜ) of nitrogen oxides produced by the heat engine upstream of the treatment system is determined using an emissions model for the nitrogen oxides by the heat engine.
